# EUROPÄISCHE PATENTSCHRIFT

(11) **EP 0 387 517 B1**
(45) Veröffentlichungstag und Bekanntmachung des Hinweises auf die Patenterteilung: **04.09.1996**
(21) Anmeldenummer: 90102058.6
(22) Anmeldetag: 02.02.1990
(51) Int. Cl.: H04N 5/44, H04N 5/782

(54) **Einrichtung zur Verarbeitung von Fernseh-Empfangssignalen zum Zweck der Erkennung und Wahl des Bildformates**
Device to process television reception signals for recognition and selection of picture format
Dispositif pour le traitement de signaux de réception de télévision dans le but de reconnaître et de choisir le format d'image

(30) Priorität: 22.02.1989 DE 3905374
(43) Veröffentlichungstag der Anmeldung: 19.09.1990
(73) Patentinhaber: GRUNDIG E.M.V. Elektro-Mechanische Versuchsanstalt Max Grundig GmbH & Co. KG, D-90762 Fürth (DE)
(72) Erfinder: Hegendörfer, Max, Dipl.-Ing., c/o GRUNDIG E.M.V., Kurgartenstrasse 37, D-8510 Fürth/Bay (DE); Obremski, Michael, c/o GRUNDIG E.M.V., Kurgartenstrasse 37, D-8510 Fürth/Bay (DE)

(56) Entgegenhaltungen:
- EP-A- 0 237 174
- WO-A-86/05644
- PATENT ABSTRACTS OF JAPAN vol. 10, no. 1 (E-371)(2058) 7. Januar 1986 & JP-A-60 165 883 (MATSHUSITA DENKI SANGYO K.K.).
- Tagungsband "International Symposium on Broadcasting Technology", Beijing, China, 24-26.09.87, Seiten 423-434

## Beschreibung

Die Erfindung betrifft eine Einrichtung zur Verarbeitung von Fernseh-Empfangssignalen mit den im Oberbegriff des Anspruchs 1 angegebenen Merkmalen.

Aus der EP-A-0 237 174 ist es bekannt, auf einem 4:3-Bildschirm Signale mit einem größeren Bildseitenverhältnis, beispielsweise 16:9, durch Reduzierung der Amplitude der Vertikalablenkung darzustellen. Die empfangsseitige Umschaltung der Ablenkung erfolgt in Ansprache auf ein im empfangenen Signal enthaltenes Kennsignal.

Aus einem im Tagungsband des "International Symposium on Broadcasting Technology", Beijing, China, 24.-26.09.87, S. 423-434, veröffentlichten Aufsatz mit dem Titel "D-MAC-A practical way forward for future TV services" ist bereits ein Satelliten-Fernsehsignal-Übertragungssystem bekannt. Bei diesem System wird sendeseitig ein Signal mit einem Bildbreiten- zu Bildhöhenverhältnis von 16:9 oder von 4:3 erzeugt. Bei einer Ausführungsform werden die einzelnen Signalkomponenten Luminanz und Chrominanz in Abhängigkeit von vorliegenden Bildformaten mit bestimmten Kompressionsfaktoren derart zeitkomprimiert und zeitmultiplexiert, daß in beiden Fällen dieselbe aktive Zeilenzeit belegt ist. Die genannten Komponenten werden zusammen mit einem Ton/Datenpaket in den einzelnen Zeilen des Signals im Zeitmultiplex übertragen. Zur Kennung des senderseitig erzeugten Bildformats wird vom Sender zum Empfänger ein Kennsignal übertragen. Die Übertragung dieses Kennsignals kann innerhalb des Ton/Datenpakets im sog. "service identification channel", d.h. in Paketen der Adresse 0̸, erfolgen. Im Satellitendecoder wird dieses Kennsignal erkannt und - je nachdem ob empfangsseitig ein Bildschirm mit einem Format von 16:9 oder 4:3 zur Verfügung steht - zur Umschaltung des Expansionsfaktors für die übertragenen Signale verwendet. Zusätzlich kann vom Sender zum Empfänger ein sog. "pan-vector" übertragen werden. Mittels dieses "pan-vectors" ist es möglich, einen bestimmten Bildausschnitt innerhalb des senderseitig erzeugten 16:9-Bildes zu definieren, welcher im Falle eines 4:3-Empfängers zur Wiedergabe verwendet wird.

Ein Nachteil des bekannten Systems besteht darin, daß im Falle einer magnetischen Aufzeichnung des Ausgangssignals des Satellitendecoders das Kennsignal für das Bildformat verloren geht. Wird das magnetisch aufgezeichnete Signal auf einem Bildschirm dargestellt, so ist diese Darstellung verzerrt, wenn aufgezeichnetes Bildformat und eingestelltes Format des Bildwiedergabegerätes sich voneinander unterscheiden. In diesem Fall müßte der Benutzer am Fernsehgerät manuell die Formatumschaltung vornehmen, um eine verzerrungsfreie Darstellung zu erreichen.

Ausgehend von diesem Stand der Technik liegt der Erfindung die Aufgabe zugrunde, eine Einrichtung der im Oberbegriff des Anspruchs 1 angegebenen Art derart weiterzubilden, daß die vorgenannten Nachteile nicht mehr auftreten.

Diese Aufgabe wird bei einer Einrichtung der im Oberbegriff des Anspruchs 1 angegebenen Art durch die im kennzeichnenden Teil des Anspruchs 1 angebenenen Merkmale gelöst. Vorteilhafte Ausgestaltungen ergeben sich aus den Unteransprüchen.

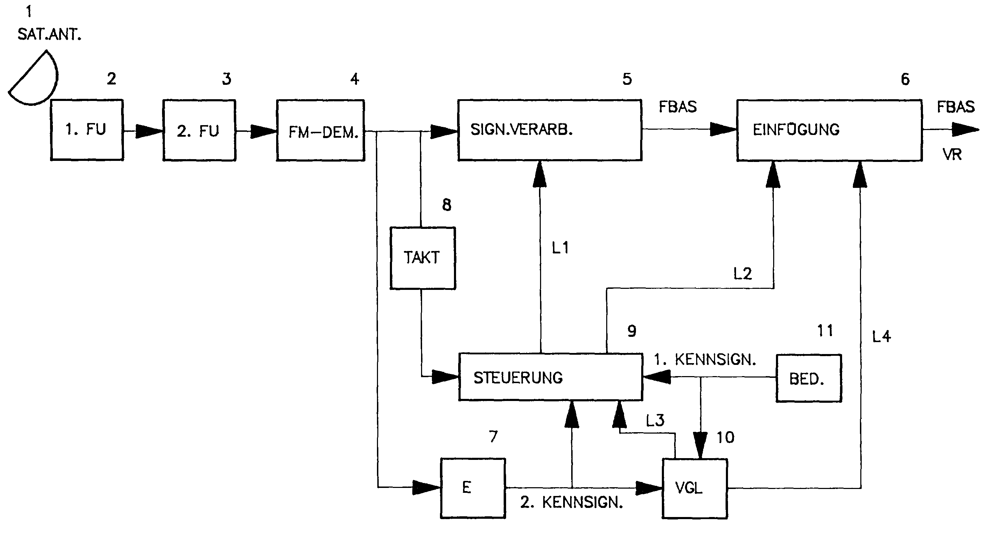

Die Vorteile der Erfindung bestehen insbesondere darin, daß am Ausgang des Signaldecoders ein Videosignal vorliegt, welches wie das Empfangssignal ein Kennsignal für das Bildformat enthält, und zwar in gegenüber dem Empfangssignal umcodierter, für die Videoaufzeichnung geeigneter Form. Dieses Kennsignal kann zusammen mit dem Videosignal aufgezeichnet und wiedergegeben werden und steht damit im Fernsehempfänger, auf dessen Bildschirm die Wiedergabe erfolgt, zur automatischen Umschaltung des Wiedergabeformats beispielsweise mittels der Strahlablenkung zur Verfügung. Weitere vorteilhafte Eigenschaften der beanspruchten Einrichtung ergeben sich aus einem Ausführungsbeispiel, welches im folgenden anhand der Figur näher erläutert wird.

Die Figur zeigt eine Satellitenempfangsantenne 1, die ein von einem Fernsehsatelliten abgestrahltes, gemäß dem D2-MAC-Verfahren codiertes Satelliten-Fernsehsignal empfängt. Dieses Signal enthält innerhalb einer Zeile im Zeitmultiplex im wesentlichen eine Ton/Dateninformation, eine Chrominanzinformation und eine Luminanzinformation. Ferner enthält jedes Vollbild in der Zeile 16 der vertikalen Austastlücke einen sog. VPS-Datensatz, der aus insgesamt 15 Wörtern besteht, welche u.a. Kennsignale für die Signalquelle, die Tondaten und die momentan übertragene Sendung aufweisen. Ferner enthält der VPS-Datensatz auch ein Kennsignal für das im Sender erzeugte Bildformat (4:3 oder 16:9).

Der genannte VPS-Datensatz wird außerdem innerhalb des Ton/Datenpakets im "service identification channel", d.h. im sogenannten Nullpaket des Satelliten-Fernsehsignals übertragen.

Der VPS-Datensatz wird empfangsseitig in bekannter Weise insbesondere dazu verwendet, die automatische Aufzeichnung einer Sendung auch dann zeitgerecht zu starten, wenn die tatsächliche Anfangszeit der Sendung gegenüber der angekündigten Anfangszeit kurzfristig verschoben wurde.

Das von der Satellitenantenne 1 empfangene Satelliten-Fernsehsignal wird über zwei Frequenzumsetzer 2 und 3 einem Frequenzdemodulator 4 zugeführt und dort demoduliert. Das demodulierte Signal wird einer Signalverarbeitungsschaltung 5, einem VPS-Decoder 7 und einer Taktsignalgewinnungsstufe 8 zugeführt.

Aus dem in der Taktsignalgewinnungsstufe 8 gewonnenen Taktsignal werden in einer Steuerschaltung 9 Steuersignale gewonnen, die über eine Verbindungsleitung L1 der Signalverarbeitungsschaltung 5 zugeführt werden. Mittels dieser Steuersignale erfolgt in der Signalverarbeitungsschaltung 5 insbesondere eine Trennung in Luminanz- und Chrominanzkomponente sowie eine Zeitexpansion der Luminanz- und Chrominanzkomponente mit einem jeweils charakteristischen Expansionsfaktor.

Die Ermittlung des jeweiligen Expansionsfaktors erfolgt in der Steuerschaltung 9 nach Maßgabe des aus dem Satelliten-Fernsehsignal im VPS-Decoder 7 gewonnenen Kennsignals für das sendeseitig erzeugte Bildformat und des über eine Bedieneinheit 11 eingegebenen Kennsignals für das empfangsseitig gewünschte Bildformat.

Die Bedieneinheit 11 kann eine am Gehäuse des Satelliten-Empfängers angeordnete Tastatur sein. Alternativ hierzu ist es aber auch möglich, das Kennsignal für das empfangsseitig gewünschte Bildformat im Rahmen einer Videorecorderprogrammierung mittels der Bedientastatur des zu programmierenden Videorecorders einzugeben und vom Videorecorder zur Steuerschaltung 9 zu übertragen.

Zeigt beispielsweise das im VPS-Decoder 7 gewonnene Kennsignal an, daß senderseitig ein 16:9-Signal erzeugt wurde, und hat das empfangsseitig gewünschte Signal das Bildformat 4:3, so erzeugt die Steuerschaltung 9 die Lesesignale für einen in der Signalverarbeitungsschaltung 5 angeordneten Speicher derart, daß nur ein bestimmter Teil der abgespeicherten Signale und damit ein bestimmter Ausschnitt aus dem 16:9-Signal mit einem für das 4:3-Bildformat geeigneten Lesetakt ausgelesen wird.

Das mittels der Bedieneinheit 11 eingegebene Kennsignal für das empfangsseitig gewünschte Bildformat wird ferner einem Vergleicher 10 zugeführt, an dessen anderem Eingang das im VPS-Decoder 7 erzeugte Kennsignal anliegt. Ergibt der Vergleich, daß die beiden Kennsignale unterschiedlich sind, wird der Steuerschaltung 9 über die Leitung L3 ein Steuersignal zugeführt. In Ansprache auf dieses Steuersignal steuert die Steuerschaltung 9 über die Leitung L2 die Einfügschaltung 6 während der Zeitintervalle, in denen innerhalb des VPS-Datensatzes das Kennsignal für das Bildformat übertragen wird, für ein auf der Leitung L4 anliegendes Signal durchlässig. Dieses Signal ist ein Kennsignal für das empfangsseitig gewünschte Bildformat.

Demzufolge wird mittels der Einfügschaltung 6 das in der Zeile 16 der Vertikalaustastlücke übertragene Kennsignal für das senderseitige Bildformat stets dann abgeändert, wenn sich übertragenes und empfangsseitig gewünschtes Bildformat voneinander unterscheiden.

In der Figur steht am Ausgang der Signalverarbeitungsstufe 5 ein FBAS-Signal zur Verfügung.

Nach einer weiteren Ausführungsform der Erfindung werden in der Signalverarbeitungsstufe 5 aus dem Satelliten-Fernsehsignal Komponentensignale, beispielsweise RGB-Signale oder Y/C-Signale gewonnen. Die Y/C-Signale können beispielsweise auf einem S-VHS-Videorecorder aufgezeichnet werden.

Nach einer weiteren Ausführungsform der Erfindung wird von der Satellitenantenne 1 ein über Satellit übertragenes PAL-Farbfernsehsignal empfangen. Da auch in diesem PAL-Farbfernsehsignal in der Zeile 16 ein VPS-Datensatz enthalten ist, ist die Erfindung auch für über Satellit übertragene PAL-Signale anwendbar. In diesem Fall sind Modifikationen der Signalverarbeitungsschaltung 5 notwendig, die jedoch dem Durchschnittsfachmann geläufig sind und deshalb nicht näher erläutert werden müssen.

## Patentansprüche

1. Vorrichtung zur Verarbeitung von Fernseh-Empfangssignalen, welche eines von mehreren möglichen Bildformaten beinhalten, mit
- Mitteln (11) zur Eingabe eines ersten Kennsignals für das empfangsseitig gewünschte Bildformat,
- einer Schaltung (7) zur Erkennung eines zusammen mit dem Fernsehsignal übertragenen zweiten Kennsignals für das Bildformat des übertragenen Fernsehsignals, und
- einer im Fersehsignalweg angeordneten Signalverarbeitungsschaltung (5) zur Verarbeitung des Fernsehsignals in Abhängigkeit von erstem und zweitem Kennsignal,
**dadurch gekennzeichnet,** daß
- eine Schaltung (10) zum Vergleich des ersten und des zweiten Kennsignals und
- eine weitere, im Fernsehsignalweg angeordnete Schaltung (6) zum Einfügen eines dritten Kennsignals in das Fernsehsignal vorgesehen sind, welche weitere Schaltung (6) dann wirksam wird, wenn sich das erste und das zweite Kennsignal voneinander unterscheiden.

2. Einrichtung nach Anspruch 1, **dadurch gekennzeichnet,** daß in der Signalverarbeitungsschaltung (5) ein Zeitmultiplexsignal in ein Komponentensignal (RGB; Y/C) umgewandelt wird.

3. Einrichtung nach Anspruch 1, **dadurch gekennzeichnet,** daß in der Signalverarbeitungsschaltung (5) in Zeitmultiplexsignal in ein zusammengesetztes Videosignal (FBAS) umgewandelt wird.

4. Einrichtung nach einem oder mehreren der vorhergehenden Ansprüche, **dadurch gekennzeichnet,** daß die Schaltung (7) zur Erkennung des zweiten Kennsignals ein VPS-Decoder ist.

5. Einrichtung nach einem oder mehreren der vorhergehenden Ansprüche, **dadurch gekennzeichnet,** daß die Mittel zur Eingabe des ersten Kennsignals die Bedientastatur eines Videorecorders sind.

## Claims

1. Device for processing received television signals which contain one of a plurality of possible picture formats, comprising
- means (11) for inputting a first code signal for the picture format desired at the receiving end,
- a circuit (7) for detecting a second code signal transmitted together with the television signal for the picture format of the transmitted television signal, and
- a signal processing circuit (5) disposed in the television signal path for processing the television signal as a function of the first and second code signal,
characterized in that
- a circuit (10) is provided for comparing the first and the second code signal and
- a further circuit (6) disposed in the television signal path is provided for inserting a third code signal into the television signal, which further circuit (6) becomes operative if the first and the second code signal differ from one another.

2. Device according to Claim 1, characterized in that a time-division multiplex signal is converted into a component signal (RGB; Y/C) in the signal processing circuit (5).

3. Device according to Claim 1, characterized in that a time-division multiplex signal is converted into a composite video signal (CCVS) in the signal processing circuit.

4. Device according to one or more of the preceding claims, characterized in that the circuit (7) for detecting the second code signal is a VPS decoder.

5. Device according to one or more of the preceding claims, characterized in that the means for inputting the first code signal are the operating keyboard of a video recorder.

## Revendications

1. Dispositif pour traiter des signaux de réception de télévision, qui contiennent l'un de plusieurs formats d'images possibles, comprenant
- des moyens (11) pour introduire un premier signal caractéristique pour le format d'image désiré côté réception,
- un circuit (7) pour identifier un second signal caractéristique transmis conjointement avec le signal de télévision, pour le format d'image du signal de télévision transmis, et
- un circuit de traitement de signaux (5) disposé dans la voie de transmission du signal de télévision pour le traitement du signal de télévision en fonction des premiers et seconds signaux caractéristiques,
caractérisé en ce qu'il est prévu
- un circuit (10) pour comparer les premier et second signaux caractéristiques, et
- un autre circuit (6) disposé dans le trajet du signal de télévision et servant à insérer un troisième signal caractéristique dans le signal de télévision, lequel autre circuit (6) devient actif lorsque les premier et second signaux caractéristiques diffèrent les uns des autres.

2. Dispositif selon la revendication 1, caractérisé en ce qu'un signal de multiplexage temporel est converti en un signal de composante (RGB;Y/C) dans le circuit de traitement de signaux (5).

3. Dispositif selon la revendication 1, caractérisé en ce qu'un signal de multiplexage temporel est converti en un signal vidéo composite (FBAS) dans le circuit de traitement de signaux.

4. Dispositif selon une ou plusieurs des revendications précédentes, caractérisé en ce que le circuit (7) servant à identifier le second signal caractéristique est un décodeur VPS.

5. Dispositif selon une ou plusieurs des revendications précédentes, caractérisé en ce que les moyens pour introduire le premier signal caractéristique sont constitués par le clavier de commande d'un magnétoscope.
